# FASCICULE DE BREVET EUROPEEN

(11) **EP 1 666 303 B1**
(45) Date de publication et mention de la délivrance du brevet: **05.03.2008**
(21) Numéro de dépôt: 05292501.3
(22) Date de dépôt: 25.11.2005
(51) Int. Cl.: B60N 3/04

(54) **Element de garnissage de sol d'un habitacle de vehicule automobile comprenant un medaillon d'aspect**
Fussbodenbelagselement für den Passagierraum eines Kraftfahrzeuges mit einem dekorativen Einsatz
Floor covering element for the passenger space of an automotive vehicle provided with a decorative insert

(30) Priorité: 03.12.2004 FR 0452864
(43) Date de publication de la demande: 07.06.2006
(73) Titulaire: Centre d'Etude et de Recherche pour l'Automobile (CERA), 51100 Reims (FR)
(72) Inventeur: Bonhomme, Patrick, 51500 Taissy (FR)
(74) Mandataire: Sayettat, Julien Christian

(56) Documents cités:
- GB-A- 2 171 902
- GB-A- 2 228 408
- US-A- 4 758 457
- PATENT ABSTRACTS OF JAPAN vol. 1999, no. 10, 31 août 1999 (1999-08-31) -& JP 11 129830 A (IKEDA BUSSAN CO LTD), 18 mai 1999 (1999-05-18)

## Description

L'invention concerne un élément de garnissage de sol d'un véhicule automobile, une architecture de montage dans un véhicule d'un tel élément et un ensemble de garnissage de sol comprenant un tel élément.

Il est connu de réaliser des éléments de garnissage de sol à base d'un matériau de revêtement thermoformé tel qu'une moquette.

Lorsque le matériau de revêtement n'est pas thermoformable en soi, comme dans le cas d'une moquette, il est connu, afin de pouvoir lui conférer une géométrie correspondant à celle du sol du véhicule, d'associer en son envers une sous-couche de matériau thermoformable, le matériau de revêtement ainsi traité étant alors thermoformé de sorte à conduire, après découpe de détourage et découpes intérieures, à l'élément de garnissage attendu.

L'étape de thermoformage requiert la mise en oeuvre de machines et outillages complexes, et ceci d'autant plus que la taille des éléments de garnissage est importante.

Elle requiert par ailleurs, un contrôle très délicat des paramètres de chauffe et de la qualité des matériaux employés, des dispersions minimes dans ces paramètre entraînant d'importantes variations dimensionnelles « post retrait » des éléments produits, ainsi qu'une stabilité dimensionnelle fluctuante au cours de leur utilisation.

Il convient aussi de mentionner la difficulté à obtenir par thermoformage des formes géométrique complexes, d'une part du fait que le matériau de revêtement forme, lorsqu'il est trop étiré, des défauts d'aspect non acceptables, et d'autre part du fait de la difficulté à réaliser des contre dépouilles. En outre, le thermoformage ne permet pas l'obtention de motifs géométriques, ces derniers étant dégradés dans les zones étirées du matériau de revêtement.

Par ailleurs, la technique du thermoformage impose d'utiliser un matériau de revêtement homogène, notamment en composition, couleur et masse surfacique.

Le thermoformage impose d'autre part d'utiliser un flan de matériau de revêtement pourvu de marges périphériques, ceci afin de pouvoir le maintenir lors de sa conformation à chaud, les marges étant ensuite éliminées lors de l'étape de détourage/découpe. De ce fait, l'étape de détourage/découpe, succédant au thermoformage du matériau de revêtement, entraîne des pertes de matière importantes, les chutes produites étant souvent difficilement réutilisables. Il en résulte un surcoût très important, autant lié aux pertes de matière qu'à la mise en oeuvre de l'opération de détourage/découpe, ainsi que des conséquences environnementales négatives.

Par ailleurs, dans les véhicules actuels, il est souvent prévu d'associer à l'élément de garnissage divers organes fonctionnels. On citera comme exemples d'organes fonctionnels : les conduits d'air, goulottes de passage de câbles électriques, bouches d'aération, éléments de fixation au sol ou de sur-tapis, cales d'absorption d'énergie lors d'une collision, talonnette, repose pied (réglable ou non), trappes d'accès, boîtiers, butée d'accélérateur, logements d'éclairage, ébénisteries de seuil de porte,...

Lorsque l'élément de garnissage est réalisé par thermoformage, il n'est pas possible d'y intégrer directement les organes fonctionnels, ce qui implique de procéder à un montage séparé de ces organes sur l'élément de garnissage, d'où un surplus de complexité et de coûts.

Il en est par exemple ainsi de la talonnette, usuellement soudée sur l'élément de garnissage une fois thermoformé. Une telle opération de soudure, notamment sur un élément tridimensionnel de grande taille, est une opération complexe et coûteuse.

Le document GB-A-2171902 décrit un élément de garnissage de sol selon le préambule de la revendication 1.

L'invention a pour but de pallier ces inconvénients en proposant un élément de garnissage de sol économique dont les paramètres de fabrication sont aisément contrôlables, présentant une bonne stabilité dimensionnelle, un aspect optimisé et une grande liberté de formes et de motifs, apportant un gain environnemental, et permettant l'intégration aisée d'organes fonctionnels.

A cet effet et selon un premier aspect, l'invention propose un élément de garnissage de sol d'un habitacle de véhicule automobile présentant une face d'aspect et une face d'envers, l'élément comprenant une structure tridimensionnelle, sensiblement mince, en matière plastique injectée, la structure comprenant au moins une ouverture, l'ouverture étant occultée par au moins un médaillon, à base de matériau de revêtement, associé en périphérie de l'ouverture, la face d'aspect de l'élément étant formée d'au moins le matériau de revêtement et de la matière plastique injectée de la structure.

La réalisation d'une structure en plastique injecté permet une grande liberté de formes, permettant d'adapter finement l'élément à la géométrie du sol du véhicule. En outre, la matière plastique n'est pas sujette à variations dimensionnelles notables une fois démoulée et refroidie.

Par « matériau de revêtement », on entend tout type de matériau de garnissage se distinguant de la matière plastique formant la base de la structure. On citera comme exemples de tels matériaux : moquette aiguilletée, moquette touffetée, peau en TPO (polyoléfine), bois, etc.

Dans la suite de la description, on emploiera le terme « moquette » pour désigner le matériau de revêtement, ce terme devant être interprété de façon large pour englober tout matériau de revêtement tel que défini ci-dessus.

Selon une réalisation, la géométrie du médaillon est sensiblement développable. Ceci permet de s'affranchir de l'étape de thermoformage prévue dans l'art antérieur. Par «géométrie développable », on entend une géométrie n'entraînant pas d'étirement sensible de la moquette. La moquette peut toutefois subir des étirements limités, du fait de son élasticité intrinsèque.

Par ailleurs, les chutes de découpe de la moquette sont limitées du fait que les médaillons sont obtenus à partir de formats de moquette découpés à plat, ce qui autorise une minimisation des chutes de découpe beaucoup plus importante que lorsque la découpe, notamment de détourage, est réalisée sur des éléments tridimensionnels.

Selon une réalisation, la géométrie du médaillon n'est pas développable. Pour éviter une étape de thermoformage de la moquette, le médaillon peut être formé d'au moins deux parties associées entre elles sur au moins une portion de leurs contours respectifs, le médaillon ne présentant alors pas une structure plane avant son association à la structure.

Selon une réalisation, la structure comprend, issu de matière, au moins un organe fonctionnel, ce qui est avantageux en termes de facilité de réalisation et de coûts.

Selon un deuxième aspect, l'invention concerne une architecture de montage d'un élément, tel que décrit ci-dessus, dans un véhicule.

Selon un troisième aspect, l'invention concerne un ensemble de garnissage de sol d'un habitacle de véhicule automobile comprenant au moins un élément tel que décrit ci-dessus.

D'autres particularités et avantages de l'invention apparaîtront dans la description qui suit, faite en référence aux figures jointes dans lesquelles :
- la figure 1 est une représentation schématique partielle en perspective d'un élément de garnissage de sol selon l'invention ;
- la figure 2 est une représentation schématique partielle en perspective de divers modes de réalisation d'un médaillon ;
- La figure 3 est une représentation schématique partielle en coupe d'un élément de garnissage de sol selon l'invention, l'élément étant monté dans le véhicule selon un mode de réalisation particulier ;
- la figure 4 est une représentation schématique en perspective d'un ensemble de garnissage de sol comprenant au moins un élément selon l'invention ;

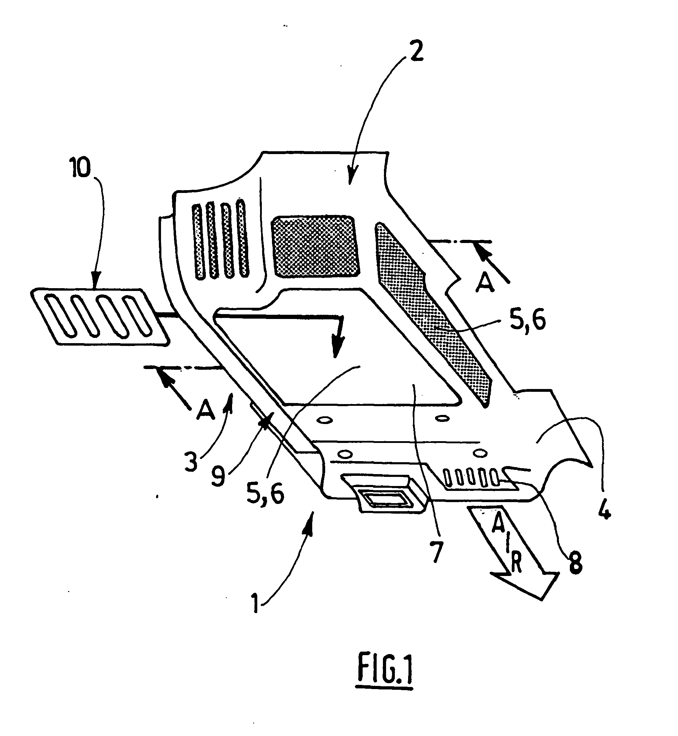

En référence à la figure 1, on décrit à présent un élément de garnissage de sol 1, comprenant une face d'aspect 2 et une face d'envers 3, la face d'aspect 2 étant la face visible des passagers.

L'élément 1 comprend une structure 4 en matière plastique injectée, sensiblement mince. La structure 4 comprend des ouvertures 5 occultées par des médaillons 6, à base de matériau de revêtement, associés en périphérie des ouvertures .

La face d'aspect 2 de l'élément 1 est formée du matériau de revêtement et de la matière plastique de la structure 4.

La structure 4 est réalisé de préférence dans un matériau plastique résistant à l'abrasion, tel qu'un polypropylène éventuellement chargé en fibres de verre, et présentant éventuellement un aspect grainé esthétiquement avantageux.

Les médaillons 6 tels que représentés sont sensiblement plans. Ils peuvent bien entendu être à base de matériaux de revêtement différant en aspect (couleur, texture, etc.) et/ou en composition.

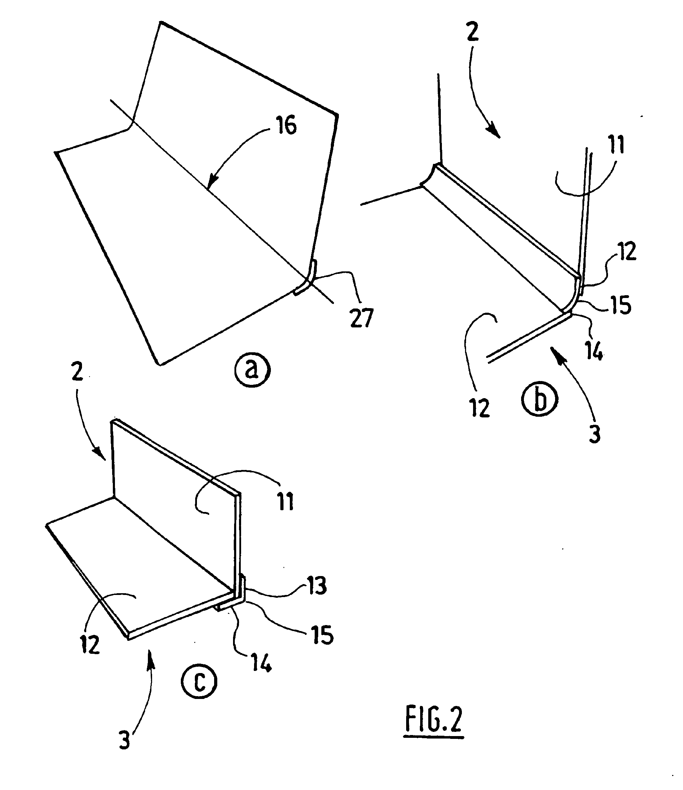

En variante, au moins un médaillon 6 peut présenter une géométrie non planaire développable. Comme représenté sur la figure 2a, le médaillon 6 peut comprendre une pliure 16. Afin d'assurer une bonne tenue mécanique de la pliure 16, il peut être prévu, d'y associer, par exemple par soudure, un profilé 27 présentant une certaine rigidité, par exemple à base de matière plastique. Le médaillon 6 présente alors, avant son association avec la structure 4, sa géométrie sensiblement finale.

De sorte à permettre le développement de la géométrie d'un médaillon 6, il peut être prévu, de façon non représentée, une ou plusieurs encoche radiales sur le contour du médaillon. Par « encoche radiale » on entend une encoche dirigée sensiblement vers la partie centrale du médaillon 6. Une encoche peut, en fonction de la géométrie attendue, présenter diverses formes : simple fente, encoche en V, etc.

Selon une autre variante, au moins un médaillon 6 peut présenter une géométrie non planaire non développable. Le médaillon 6 peut être formé, comme représenté en figures 2b et 2c, d'au moins deux parties 11,12 associées entre elles sur au moins une portion 13, 14 de leurs contours respectifs, le médaillon 6 présentant alors une géométrie non planaire avant son association à la structure 4. Les deux parties peuvent différer en aspect et/ou en composition.

Cette association peut être réalisée par l'intermédiaire d'un organe de liaison 15, par exemple un profilé de matière plastique, les portions de contours 13, 14 respectives étant associées à l'organe, par exemple par soudure. L'organe 15 peut présenter une certaine rigidité, de sorte à assurer une bonne conformation du médaillon 6 à la géométrie attendue.

Les figures 2b et 2c présentent le positionnement de l'organe de liaison 15 respectivement contre la face d'aspect 2 et contre la face d'envers 3.

Selon la réalisation représentée en figure 1, l'élément 1 comprend au moins une cave à pieds 7, c'est à dire une forme de cuvette destinée à recevoir les pieds des passagers, un médaillon 6 étant prévu en fond de la cave à pieds. De façon générale, il peut être prévu de disposer préférentiellement des médaillons 6 dans les zones visibles par les passagers. Ainsi, il peut être prévu que les zones sous sièges soient prévues avec la structure apparente, soit en aspect plastique.

Selon la réalisation représentée en figure 1, la structure 4 comprend, issu de matière, au moins un organe fonctionnel tel qu'une bouche d'aération 8 ou une ébénisterie de seuil de porte 9 du véhicule.

D'autres organes fonctionnels peuvent être prévus issus de matière : conduits d'air, éléments de fixation de l'élément 1 au sol du véhicule, fixations des médaillons 6 à la structure 4, cales d'absorption d'énergie lors d'une collision, talonnette, repose pied réglable ou non, fixations de sur-tapis, trappes d'accès à des rangements sous l'élément 1, boîtiers électriques, butée d'accélérateur, boîtier pour dispositif d'éclairage, etc.

Concernant la talonnette, il peut être prévu en alternative qu'elle soit rapportée. La figure 1 illustre de façon schématique l'ajout séparé d'une talonnette 10 lors de l'opération d'association des médaillons 6 à la structure 4. La talonnette 10 peut être associée à l'élément 1 par tout moyen connu : clips, collage, etc.

En variante non représentée, la talonnette peut être soudée sur un médaillon 6, ou une partie de médaillon 6, avant association du médaillon 6 à la structure 4. Une telle opération de soudure s'avère simplifiée, par rapport à l'art antérieur, du fait de la structure plane du médaillon 6, ou de la partie du médaillon 6, et de sa taille limitée.

Selon une réalisation non représentée, le médaillon 6 est associé à la structure 4 par des moyens d'association réversibles, tels que des clips ou des bandes accrochantes de type « velcro ». Ceci permet de procéder à un remplacement aisé des médaillons 6 endommagés, de faciliter leur nettoyage, de permettre une modularité dans les matériaux de revêtement utilisés, etc.

Lorsque le médaillon 6 est une moquette, il peut comprendre une sous couche de rigidification destinée à lui donner de la tenue mécanique, par exemple à base de matière plastique de type polyéthylène. Cependant, du fait de la présence de la structure 4, présentant une certaine rigidité, il est possible d'utiliser une moquette très souple, ce qui s'avère très complexe lorsque l'élément 1 est réalisé par thermoformage, ceci en raison de la mauvaise tenue mécanique de l'élément ainsi obtenu.

Selon une réalisation non représentée, l'élément 1 comprend en outre, associée à sa face d'envers 3, une couche de matériau poreux ou fibreux de protection acoustique. Cette couche peut être associée à une couche dense, de sorte à procurer une isolation de type « masse ressort ». En variante, la couche dense peut être disposée sans couche de matériau poreux ou fibreux.

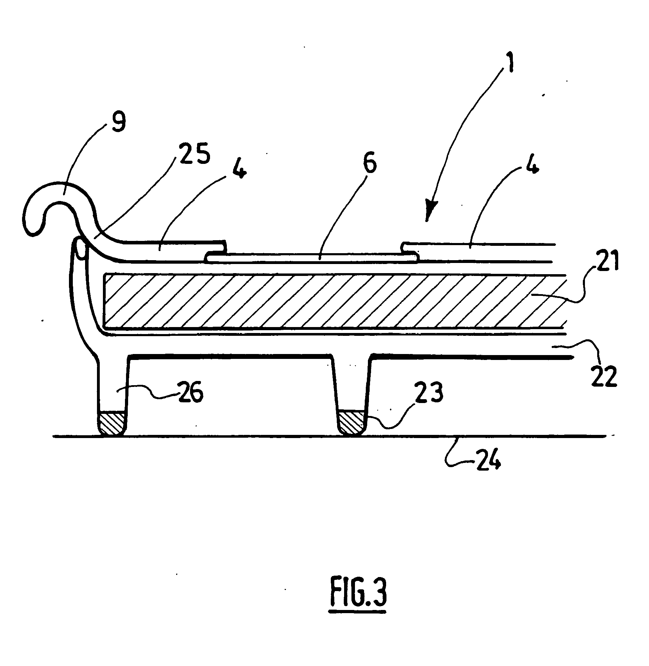

La figure 3 représente le montage, selon un mode de réalisation particulier, d'un élément de garnissage de sol 1 dans le véhicule. L'élément 1 comprend une structure 4 associée à un médaillon 6. Il comprend en outre une ébénisterie 9 de seuil de porte issue de matière.

En référence à la figure 3, on décrit une architecture de montage dans un véhicule de l'élément 1 tel que décrit ci-dessus.

L'élément 1 est disposé sur un faux-plancher 22, par exemple à base de matière plastique injectée, le faux-plancher étant destiné notamment à conférer une planéité au sol du véhicule et à créer des espaces de passages de câbles, de rangements, etc... Le faux-plancher 22 comprend des organes de piètement 26, issus de matière, reposant sur la structure de sol du véhicule 24, par exemple à base de tôle. Des patins souples 23, par exemple en mousse, sont prévus en extrémité libre des organes de piètement 26 de sorte à assurer un amortissement acoustique. En outre, une couche de matériau souple 21, de type poreux ou fibreux, par exemple à base de mousse refendue, est prévue entre l'élément 1 et le faux plancher 22, ceci à des fins de protection acoustique. L'élément 1 peut être associé au faux plancher par des organes de fixation 25, tels que des clips.

D'autres types de montage peuvent bien entendu être prévus. En particulier, l'élément 1 peut être disposé à même la structure de sol 24.

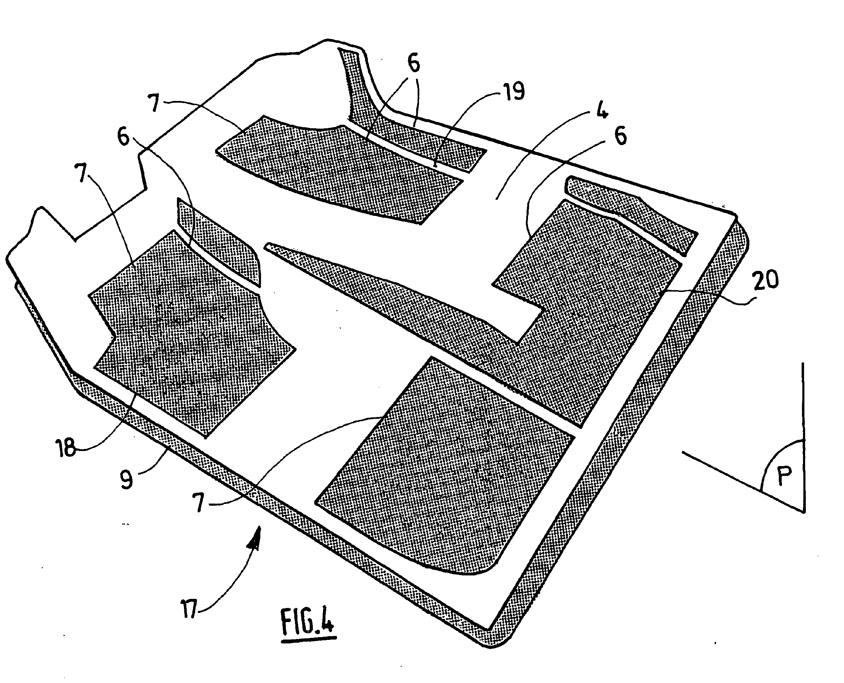

La figure 4 représente un ensemble de garnissage de sol 17 d'un habitacle de véhicule automobile comprenant au moins un élément 1 tel que décrit précédemment, et une pluralité de médaillons 6 pouvant différer en aspect, notamment couleur, et/ou en composition, ceci permettant de conférer à l'ensemble une esthétique avantageuse et/ou d'adapter les caractéristiques mécaniques des médaillons en fonction des contraintes, notamment d'abrasion, auxquelles ils sont soumis.

L'ensemble 17 représenté en figure 4 comprend une pluralité de médaillons 6 séparés les uns des autres par des zones de la structure 4. On observe en outre la présence de médaillons 6 en fond des caves à pieds 7. L'ensemble 17 comprend en outre, issu de matière depuis la structure 4, des ébénisteries de seuils de porte 9. Divers autres organes fonctionnels peuvent bien entendu être prévus intégrés à la structure 4.

Selon une réalisation, l'ensemble 17 comprend deux éléments avant, respectivement gauche 18 et droit 19, sensiblement symétriques par rapport à un plan (P) qui correspond sensiblement au plan de symétrie du véhicule, et un élément arrière 20, l'ensemble garnissant sensiblement la totalité du sol de l'habitacle. Un tel agencement permet notamment de faciliter le montage de l'ensemble 17 dans le véhicule.

Les différents éléments constitutifs de l'ensemble 17 peuvent être juxtaposés ou associés, de façon réversible ou non, entre eux. L'ensemble monté dans le véhicule peut être disposé sur une couche de matériau poreux ou fibreux, et/ou une couche dense, de protection acoustique, sur la structure de sol ou sur un faux plancher tel que décrit précédemment. Bien entendu, le traitement acoustique peut être différencié selon les zones, notamment par l'utilisation d'une pluralité de couches de protection acoustique, de caractéristiques différentes, juxtaposées sensiblement dans un même plan.

Pour réaliser l'ensemble 17, il convient de réaliser séparément la structure 4 et les médaillons 6, puis de procéder à l'assemblage des médaillons sur la structure. Comme décrit précédemment, aucune étape de thermoformage des médaillons 6 n'est prévue, la mise en forme éventuelle des médaillons se faisant par pliage et/ou association de plusieurs parties de médaillon entre elles.

## Revendications

1. Elément (1) de garnissage de sol d'un habitacle de véhicule automobile présentant une face d'aspect (2) et une face d'envers (3), l'élément (1) comprenant une structure (4) tridimensionnelle, sensiblement mince, en matière plastique injectée, **caractérisé en ce que,** la structure (4) comprend au moins une ouverture (5), l'ouverture (5) étant occultée par au moins un médaillon (6), associé en périphérie de l'ouverture (5), à base de matériau de revêtement, la face d'aspect (2) de l'élément étant formée d'au moins le matériau de revêtement et de la matière plastique injectée de la structure (4).

2. Elément selon la revendication 1, **caractérisé en ce que** le matériau de revêtement est à base de moquette.

3. Elément selon la revendication 1 ou 2, **caractérisé en ce que** la géométrie du médaillon (6) est sensiblement développable.

4. Elément selon la revendication 3, **caractérisé en ce que** le contour du médaillon (6) comprend au moins une fente radiale, de sorte à permettre le développement de sa géométrie.

5. Elément selon l'une quelconque des revendications 1 à 4, **caractérisé en ce que** le médaillon (6) comprend une pliure (16) renforcée par un profilé (27) qui lui est associé.

6. Elément selon l'une quelconque des revendications 1 à 5, **caractérisé en ce que** le médaillon (6) est formé d'au moins deux parties (11, 12) associées entre elles sur au moins une portion de leurs contours (13, 14) respectifs.

7. Elément selon la revendication 6, **caractérisé en ce que** les deux parties (11, 12) du médaillon (6) sont associées entre elles par l'intermédiaire d'un organe de liaison (15).

8. Elément selon l'une quelconque des revendications 1 à 7, **caractérisé en ce qu**'il comprend au moins une cave à pieds (7), un médaillon (6) étant prévu en fond de la cave à pieds (7).

9. Elément selon l'une quelconque des revendications 1 à 8, **caractérisé en ce que** la structure (4) comprend, issu de matière, au moins un organe fonctionnel tel qu'une bouche d'aération (8) ou une ébénisterie de seuil de porte (9).

10. Elément selon l'une quelconque des revendications 1 à 9, **caractérisé en ce qu**e le médaillon (6) est associé à la structure (4) par des moyens d'association réversibles.

11. Elément selon l'une quelconque des revendications 1 à 10, **caractérisé en ce qu**'il comprend en outre, associée à sa face d'envers (3), une couche de matériau poreux ou fibreux et/ou une couche dense de protection acoustique.

12. Architecture de montage dans un véhicule d'un élément (1) selon l'une quelconque des revendications précédentes, l'élément (1) étant associé à un faux-plancher (22), une couche de matériau souple de protection acoustique (21) étant prévue entre l'élément (1) et le faux-plancher (22).

13. Ensemble de garnissage de sol (17) d'un habitacle de véhicule automobile comprenant au moins un élément (1) selon l'une quelconque des revendications 1 à 11.

14. Ensemble selon la revendication 13, **caractérisé en ce qu**'il comprend deux éléments avant, respectivement gauche (18) et droit (19), sensiblement symétriques par rapport à un plan (P), et un élément arrière (20), l'ensemble (17) garnissant sensiblement la totalité du sol de l'habitacle.

15. Ensemble selon la revendication 13 ou 14, **caractérisé en ce qu**'il comprend au moins deux médaillons (6) différant en aspect, notamment couleur, et/ou en composition.

## Claims

1. Floor lining element (1) for a motor vehicle passenger compartment having a front face (2) and a back face (3), the element comprising a substantially thin, three-dimensional structure (4) made of an injection-moulded plastic material, **characterised in that** the structure (4) includes at least one opening (5), the opening (5) being concealed by at least one associated emblem (6) along the periphery of the opening (5), made of a covering material, the front face (2) of the element being formed from at least the covering material and the injection-moulded plastic material of structure (4).

2. Element of claim 1, **characterised in that** the covering element is made of carpet.

3. Element of claim 1 or 2, **characterised in that** the geometry of the emblem (6) is substantially developable.

4. Element of claim 3, **characterised in that** the contour of the emblem (6) includes at least one radial slot, so as to enable the development of the geometry thereof.

5. Element as claimed in any of claims 1 to 4, **characterised in that** the emblem (6) includes a fold reinforced by a profile (27) associated therewith.

6. Element as claimed in any of claims 1 to 5, **characterised in that** the emblem (6) consists of at least two pieces (11, 12) connected together over at least one portion of their respective contours (13, 14).

7. Element of claim 6, **characterised in that** the two pieces (11, 12) of the emblem (6) are connected together by means of a connecting member (15).

8. Element as claimed in any of claims 1 to 7, **characterised in that** it includes at least one footrest (7) one emblem (6) being providing on the bottom of the footrest (7).

9. Element as claimed in any of claims 1 to 8, **characterised in that** structure (4) includes, from material, at least one integral functional member such as a vent (8) or a wood-crafted door sill (9).

10. Element as claimed in any of claims 1 to 9, **characterised in that** the emblem (6) is connected to the structure (4) by reversible connecting means.

11. Element as claimed in any of claims 1 to 10, **characterised in that**, associated with the back side (3) thereof, it further includes a layer of porous or fibrous material and/or a thick, sound-proofing layer.

12. Architecture for mounting an element (1) as claimed in any of the preceding claims inside a vehicle, the element (1) being associated with a sub-floor (22), and a flexible sound-proofing material (21) being provided between element (1) and the sub-floor (22).

13. Floor lining assembly (17) for a motor vehicle passenger compartment comprising at least one element (1) as claimed in any of claims 1 to 11.

14. Assembly of claim 13, **characterised in that** it includes two front elements, respectively left (18) and right (19), which are substantially symmetrical in relation to a plan (P), and a rear element (20), the assembly (17) lining substantially the entire floor of the passenger compartment.

15. Assembly of claim 13 or 14, **characterised in that** it includes at least two emblems (6) differing in appearance, in particular in the colour and/or composition thereof.

## Patentansprüche

1. Element (1) zum Belag des Fußbodens eines Kraftfahrzeug-Innenraums, umfassend eine Vorderseite (2) und eine Hinterseite (3), wobei das Element eine sehr dünne dreidimensionale Struktur (4) aus gespritztem Plastikmaterial umfasst, **dadurch gekennzeichnet, dass** die Struktur (4) mindestens eine Öffnung (5) umfasst, wobei die Öffnung (5) durch mindestens einen Einsatz (6), im Umfang mit der Öffnung (5) verbunden, auf der Grundlage des Verkleidungsmaterials, verborgen ist, wobei die Vorderseite (2) des Elementes aus mindestens dem Verkleidungsmaterial und dem gespritzten Plastikmaterial der Struktur (4) gebildet ist.

2. Element nach Anspruch 1, **dadurch gekennzeichnet, dass** das Verkleidungsmaterial auf einem Teppichboden basiert ist.

3. Element nach Anspruch 1 oder 2, **dadurch gekennzeichnet, dass** die Geometrie des Einsatzes (6) im Wesentlichen entwickelt werden kann.

4. Element nach Anspruch 3, **dadurch gekennzeichnet, dass** der Umfang des Einsatzes (6) mindestens einen radialen Schlitz umfasst, um die Entwicklung seiner Geometrie zu ermöglichen.

5. Element nach einem der Ansprüche 1 bis 4, **dadurch gekennzeichnet, dass** der Einsatz (6) einen Knick (16) umfasst, der durch ein Profil (27) verstärkt ist, das mit ihm verbunden ist.

6. Element nach einem der Ansprüche 1 bis 5, **dadurch gekennzeichnet, dass** der Einsatz (6) aus mindestens zwei Teilen (11, 12) gebildet ist, die untereinander auf mindestens einem Teil ihrer Umfänge (13, 14) verbunden sind.

7. Element nach Anspruch 6, **dadurch gekennzeichnet, dass** die zwei Teile (11, 12) des Einsatzes (6) untereinander mithilfe eines Verbindungselementes (15) verbunden sind.

8. Element nach einem der Ansprüche 1 bis 7, **dadurch gekennzeichnet, dass** es mindestens einen Fußraum (7) umfasst, wobei ein Einsatz (6) am Boden des Fußraumes (7) vorgesehen ist.

9. Element nach einem der Ansprüche 1 bis 8, **dadurch gekennzeichnet, dass** die Struktur (4), stammend aus dem Material, mindestens ein funktionelles Organ umfasst, wie z.B. eine Lüftungsöffnung (8) oder eine Verkleidung des Bodens der Tür (9).

10. Element nach einem der Ansprüche 1 bis 9, **dadurch gekennzeichnet, dass** der Einsatz (6) durch umkehrbare Verbindungsmittel mit der Struktur (4) verbunden ist.

11. Element nach einem der Ansprüche 1 bis 10, **dadurch gekennzeichnet, dass** es außerdem, verbunden mit seiner Rückseite (3), eine Schicht aus porösem oder faserigem Material und/oder eine dichte Schall-Schutzschicht umfasst.

12. Architektur zur Montage eines Elementes (1) in einem Fahrzeug nach einem der vorhergehenden Ansprüche, wobei das Element (1) mit einem Doppelboden (22) verbunden ist, wobei eine Schicht aus flexiblem Schallschutz-Material (21) zwischen dem Element (1) und dem Doppelboden (22) vorgesehen ist.

13. Gruppe zum Belag des Fußbodens (17) eines Kraftfahrzeug-Innenraums, umfassend mindestens ein Element (1) nach einem der Ansprüche 1 bis 11.

14. Gruppe nach Anspruch 13, **dadurch gekennzeichnet, dass** sie zwei vordere Elemente, links (18) bzw. rechts (19), die im Wesentlichen symmetrisch hinsichtlich einer Ebene (P) sind, sowie ein hinteres Element (20) umfasst, wobei die Gruppe (17) ungefähr den gesamten Fußboden des Innenraums belegt.

15. Gruppe nach Anspruch 13 oder 14, **dadurch gekennzeichnet, dass** sie mindestens zwei Einsätze (6) mit verschiedenem Aussehen, insbesondere hinsichtlich der Farbe und/oder der Zusammensetzung, umfasst.
